# EUROPEAN PATENT SPECIFICATION

(11) **EP 2 211 637 B1**
(45) Date of publication and mention of the grant of the patent: **19.06.2013**
(21) Application number: 08853259.3
(22) Date of filing: 28.11.2008
(51) Int. Cl.: A23L 1/10, A23L 1/164, A23L 1/182

(54) **A METHOD FOR PREPARING STICK SHAPED INSTANT FLAVORED GLUTINOUS RICE BY USING RETORT PROCESS**
VERFAHREN ZUR HERSTELLUNG VON STABFÖRMIGEM UND AROMATISIERTEM FERTIGREIS IN EINEM RETORTENVERFAHREN
PROCÉDÉ DE PRÉPARATION DE RIZ GLUANT AROMATISÉ INSTANTANÉ EN FORME DE BÂTONNET À L'AIDE D'UN TRAITEMENT EN AUTOCLAVE

(30) Priority: 30.11.2007 KR 20070123725
(43) Date of publication of application: 04.08.2010
(73) Proprietor: CJ CheilJedang Corporation, Jung-gu Seoul 100-802 (KR)
(72) Inventor: KIM, Jong Wook, Seoul 157-040 (KR); CHUNG, Su Yeon, Seoul 135-280 (KR); LEE, Chang Yong, Seoul 100-749, (KR)
(74) Representative: Mai, Dörr, Besier
(86) International application number: PCT/KR2008/007065
(87) International publication number: WO 2009/069978

(56) References cited:
- WO-A2-2004/032646
- JP-B2- 3 450 977
- KR-B1- 100 364 525
- KR-B1- 100 728 389
- US-A- 1 655 726

## Description

### Technical Field

The present invention relates, in general, to a method for preparing stick-shaped instant flavored glutinous rice by using a retort process, which has excellent taste and flavor, and is able to be preserved at room temperature for a long time period because of the improved preservative property and is able to be produced in the form of a stick-shaped package which is easily portable hence comforming to modern people and matching the life style of modem people.

**Background Art**

In Korea where the staple food is rice, favorite foods including various kinds of rice cakes have been produced from rice since ancient times. Among them flavored glutinous rice is a food native to Korea which is made by mixing various materials with cooked glutinous rice and hard-boiled rice, and steaming the rice mixture in an earthenware steamer, and it is used in banquets or traditional ceremonies.

In recent years, a variety of cultural trends have been established in pursuit of the trend of living healthily, and the food culture has exhibited a tendency for great change. In connection with these trends, substitute foods made from rice which is one of the Korean agricultural products, but not substitute breakfast foods nor powdered snack foods such as breads or sandwiches, have become increasingly consumed in Korea. Among them porridges or rice cakes belong to the representative traditional foods. Therefore, flavored glutinous rice allowing a balanced nutritional intake may be suitable as a substitute breakfast food or as a snack food for between meals, and its further development is required in order to satisfy consumer's tastes.

In general, jujube, chestnut and the like are used in the flavored glutinous rice. Here, microorganisms are generally present at a concentration of approximately 10³ to 10⁴ CFU/g and heat-resistant microorganisms which form spores are also present at a concentration of approximately 10¹ to 10² CFU/g in the jujube. Generic bacteria and heat-resistant bacteria are not present in the sugared chestnut that is prepared by cutting chestnut into pieces of a constant size and subjecting the pieces of chestnut to sugar solution adjustment and sterilization processes. However, the crude chestnut may be contaminated with approximately 10³ to 10⁴ CFU/g of microorganisms during the sugar solution adjustment and sterilization processes, and therefore it is necessary to control the population of the microorganisms.

Also, it has been known that approximately 10² to 10⁴ CFU/g of microorganisms are generally present on the surface of polished glutinous rice. In general, flavored glutinous rice is prepared by mixing a certain amount of cooked rice water with glutinous rice and heating the glutinous rice at a temperature of around 100°C for 30 minutes. Here, the cooked rice water is prepared by adding water, soy sauce, cinnamon powder, sugar and salt. During the process of preparing flavored glutinous rice, generic cells of the microorganisms in the non-glutinous rice and jujube are killed but their heat-resistant spores are not completely exterminated. The flavored glutinous rice cooked in households for lunch boxes or prepared in factories and used within a day have a problem associated with these heat-resistant microorganisms. Also, the problems may be more serious due to the proliferation of the heat-resistant microorganisms when the rice is kept at room temperature for an extended time period before its distribution.

Korean Patent No. 58,780 discloses a method for preparing a flavored glutinous rice which is packaged in a sterile manner into a tray, such that the flavored glutinous rice has the same taste as conventional flavored glutinous rice, and may be stored for a long time period.
Korean Patent KR 100 728 389 discloses a method for preparing sweet rice cake(Yaksik) by sealing a mixture of soaked rice as a main material, jujubes and chest nuts as a subsidiary material, sugar and salt as a seasoning material and caramel sauce in a vacuum state and heating in a retort sterilizer is provided to ensure the distribution period of more than 3 months through complete sterilization and provide optimal sensory characteristics related with taste, flavor and flavor. Raw material is put into a vessel, vacuumed with inert gas, sealed, sterilized and heated in a retort sterilizer and then cooled. The sterilizing and heating process contains: sterilizing at 110-115°C by gradually raising the pressure to 1.35 kg/cm² from 0.01 kg/cm² for 20 to 35 minutes; and heating at 115-125°C by gradually raising the pressure to 2.30 kg/cm² from 1.35 kg/cm² for 25-40 minutes. The cooling process is achieved by draining off hot water from the retort sterilizer, supplying cold water and gradually reducing the pressure from 2.30kg/cm² for 40-50 minutes. The raw material contains: 60-75% by weight of soaked rice as a main material; 6-20% by weight of jujubes and chest nuts as a subsidiary material; 17-30% by weight of sugar and salt as a seasoning material; and 2-5% by weight of caramel sauce. The seasoning material contains 9.75-15.3% by weight of sugar, 2-4% by weight of dark soy sauce, 1-3% by weight of sesame oil, 4-7% by weight of honey, 0.05-0.2% by weight of cinnamon bark powder and 0.2-0.5% by weight of salt, based on the total weight of the raw material.

However, since in the case of the conventional method flavored glutinous rice is prepared through the sterilization process after the cooling process, it is difficult to maintain the inherent flavors and texture of the flavored glutinous rice due to the heat treatment, and the portability of the flavored glutinous rice is poor when it is packaged into the tray.

Therefore, the present inventors have attempted to develop a method for preparing flavored glutinous rice whose inherent flavors and texture are improved and whose portability is enhanced for the purpose of solving the above technical problems. The present invention has been completed on the basis of the above facts.

**Disclosure of Invention**

### Technical Problem

Accordingly, the present invention has been made keeping in mind the above problems occurring in the prior art, and an object of the present invention is to provide a method for preparing stick-shaped instant flavored glutinous rice by using a retort process where sterilization and cooking processes are performed at the same time.

Another object of the present invention is to provide a stick-shaped instant flavored glutinous rice prepared according to the method for preparing a stick-shaped instant flavored glutinous rice, wherein the stick-shaped instant flavored glutinous rice prepared is easily portable.

**Technical Solution**

In order to accomplish the above objects, the present invention provides a method for preparing a stick-shaped instant flavored glutinous rice by using a retort process where sterilization and cooking processes are performed at the same time.

Also, the present invention provides a method for preparing a stick-shaped instant flavored glutinous rice, the method including:

(a) blenching and dipping a solid material used in the flavored glutinous rice in an aqueous calcium solution;

(b) washing glutinous rice and dipping the glutinous rice in a caramel color solution;

(c) homogeneously mixing the solid material used in the flavored glutinous rice with the glutinous rice dipped in the step (b) and coating the resulting mixture with sesame oil and maize germ oil:

(d) primarily charging the mixture of the glutinous rice and the solid material used in the flavored glutinous rice into a stick-shaped, heat-resistant packing material;

(e) secondarily charging cooked rice water into the solid matter-charged packing material;

(f) sealing the completely charged packing material;

(g) subjecting the completely charged packing material to a retort process; and

(h) cooling the completely charged packing material.

For the preparation method according to one exemplary embodiment of the present invention, the pre-treatment step (a) may be used to maintain the texture and color of the solid material used in the flavored glutinous rice by blenching and dipping the solid material used in the flavored glutinous rice in an aqueous calcium solution. In this case, the solid material used in the flavored glutinous rice is preferably blenched in a 0.1 to 0.3 % by weight calcium solution at 50 to 70°C for 20 to 30 minutes.

The solid material used in the flavored glutinous rice may be one raw material selected from the group consisting of jujube, chestnut and pine nut, and may further include materials such as currant, walnut, ginseng sunflower seeds, pumpkin seeds, gingko nuts and the like in addition to the jujube, chestnut and pine nut.

Glutinous rice is used as the raw rice material and is washed with purified water to remove starch components and other impurities with which a surface of the glutinous rice is covered, and then dipped into a caramel color solution. Dipping the glutinous rice into the caramel color solution imparts a uniform color to the flavored glutinous rice. In this case, the glutinous rice is preferably dipped in a 0.2 to 1.0 % by weight caramel color solution for 60 to 90 minutes.

The dipped glutinous rice and the solid material used in the flavored glutinous rice are homogeneously mixed, and coated with a combination of sesame oil and maize germ oil, unlike the conventional preparation method using only sesame oil.

The maize germ oil is pressed from corn embryo, and is widely used in a variety of cooking applications since it has excellent oxidative stability compared to the other edible oils and has good taste at a room temperature, as well as having an excellent preservative property after the heat treatment and excellent light stability when exposed to light. In particular, the maize germ oil has been increasingly used in health foods and processed foods as the maize germ oil has been found to be beneficial to human health, for example, by reducing a concentration of cholesterol in blood, which is one of the known causes of adult disease. Also, the maize germ oil has advantages in that it contains a high content (34 to 62%) of linoleic acid which is one of the essential fatty acids, and also includes higher contents of phospholipid, tocopherol and sterol than other edible oils do.

In accordance with the present invention, a mixing ratio of sesame oil and maize germ oil is one important factor. The mixing ratio of sesame oil to maize germ oil is preferably in a range of 3:1. Also, contents of the sesame oil and maize germ oil are preferably in a range of 0.5 to 1.0 % by weight, based on the total solid content. In accordance with the present invention, the packing material and its contents are easily separated in the case of the finished products coated with the sesame oil and the maize germ oil.

After the coating process, a mixture of the glutinous rice and the solid material used in the flavored glutinous rice is primarily charged into a stick-shaped, heat-resistant packing material. In this case, the portability of the products may be improved due to the stick-shaped package.

Also, cooked rice water is secondarily charged into the solid matter-charged packing material, and then the packing material is preferably sealed.

The cooked rice water preferably includes at least one material selected from the group consisting of soy sauce, cinnamon essence, sugar, salt and sesame oil, and may further include cinnamon powder, honey, caramel sauce, vegetable oil, animal oil and the like in addition to the above-mentioned materials.

The cooked rice water and purified water are mixed and boiled at 50 to 70°C for 30 minutes, but the present invention is not particularly limited thereto.

Then, the packaged stick-shaped product is subject to a retort process in a closed space. This retort process is carried out according to the sterile cooling method in which a cooking process is performed along with the sterilization process. When the flavored glutinous rice is prepared by the sterilization process after the cooking process according to the conventional method, the prepared flavored glutinous rice has a problem in that its texture is made undesirable due to the heat treatment. The method including a retort process in which sterilization and cooking processes are performed at the same time, according to one exemplary embodiment of the present invention, has an advantage in that it satisfies the same quality characteristics (for example, texture, taste and flavor) as those of the conventional household cooking method. In this case, the retort process is divided into two steps. The first step of the retort process is carried out at a temperature of 80 to 120°C, and preferably 100 to 110°C for 5 to 20 minutes, and the second step of the retort process is carried out at a temperature of 100 to 140°C, and preferably 120 to 130°C for 5 to 20 minutes. Then, the packaged stick-shaped product is subject to a cooling process at 15 to 30°C for 10 to 20 minutes in order to control the proliferation of thermophilic bacteria. In this case, the packaged stick-shaped product is preferably sterilized in a retort tank while the retort tank is rotated at a rotary speed of 3 to 6 rpm in order to make the color more uniform and improve the quality of the product. Therefore, it is possible to secure the stability of the product against microorganisms.

The product prepared by the retort process is commercialized after the drying process.

For the flavored glutinous rice prepared by the method according to one exemplary embodiment of the present invention, the texture of the solid material used in the flavored glutinous rice is improved in the pre-treatment step of blenching and dipping the solid material in an aqueous calcium solution, and the color of the flavored glutinous rice is made uniform by dipping the glutinous rice used as the raw rice material in a caramel color solution. Also, the packing material and its contents are easily separated in the case of the finished products coated with the sesame oil and the maize germ oil. Furthermore, quality of the final products may be improved when the final products are prepared by the retort process in which a stick-shaped product, which is sealed after secondarily charging the cooked rice water, is sterilized and cooked in a closed place at the same time.

Also, the present invention provides a stick-shaped instant flavored glutinous rice prepared according to the method for preparing a stick-shaped instant flavored glutinous rice, wherein the stick-shaped instant flavored glutinous rice is easily portable.

As described above, the stick-shaped instant flavored glutinous rice has excellent taste and flavor, and has an improved preservative property, and therefore the stick-shaped instant flavored glutinous rice may be stored at room temperature for an extended time period, i.e. 6 months. Also, the flavored glutinous rice, which may be produced in the form of stick-shaped package whose easily portable shape matches with the life style of modem people, may be easily used without regard to time and space.

**Advantageous Effects**

As described above, the method for preparing a stick-shaped instant flavored glutinous rice by using a retort process in which sterilization and cooking processes are performed at the same time, according to one exemplary embodiment of the present invention, may be useful to prepare a stick-shaped instant flavored glutinous rice which has excellent safety against microorganisms, compared to the flavored glutinous rice prepared by performing the conventional sterilization process after the cooking process, and also is useful to prepare flavored glutinous rice on an industrial scale since the high-quality, instant flavored glutinous rice keeping the inherent flavor texture of the flavored glutinous rice intact may be provided.

Also, the flavored glutinous rice prepared by the method according to one exemplary embodiment of the present invention may be easily used since it is produced in the form of a stick-shaped package whose portability matches the life style of modern people.

**Brief Description of Drawings**

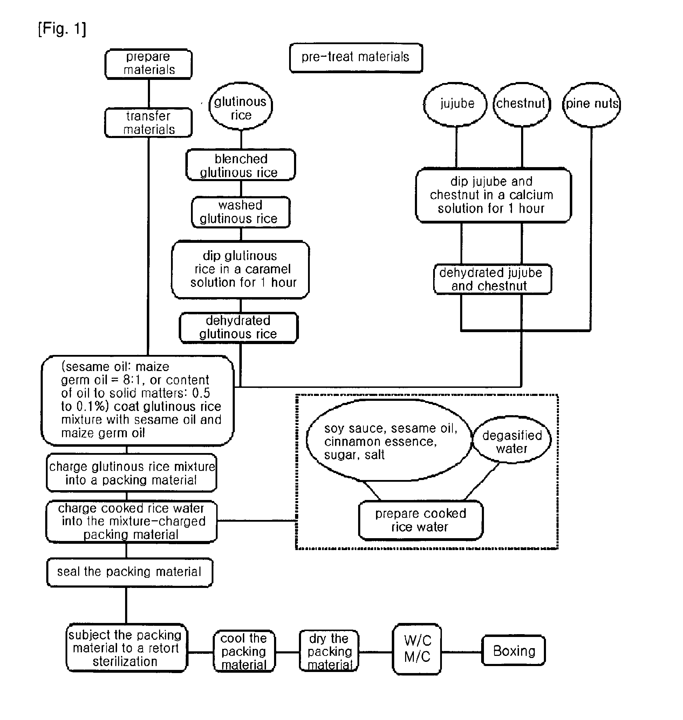

FIG. 1 is a flow chart showing a method for preparing stick-shaped instant flavored glutinous rice by using a retort process where sterilization and cooking processes are performed at the same time according to one exemplary embodiment of the present invention.

**Best Mode for Carrying out the Invention**

A better understanding of the present invention may be obtained through the following examples which are set forth to illustrate, but are not to be construed as limiting the present invention.

EXAMPLES

COMPARATIVE EXAMPLE 1

300 g of glutinous rice was washed with water, and the used water was discarded. Then, certain materials such as chestnut, jujube and currant were added, and cooked rice water was also added to the glutinous rice. Here, the cooked rice water was previously prepared by mixing soy sauce, cinnamon essence, sugar, salt, sesame oil and caramel color. Then, the resulting rice mixture was cooked at 100°C for 25 minutes. The rice mixture was cooled for 3 minutes in a rectangular forming frame, and then cut into glutinous rice pieces of 15 cm (W)×15 cm (H)×10 cm (D).

COMPARATIVE EXAMPLE 2

300 g of glutinous rice was washed with water, and the used water was discarded. Then, certain materials such as chestnut, jujube and currant were added, and cooked rice water was also added to the glutinous rice. Here, the cooked rice water was previously prepared by mixing soy sauce, cinnamon essence, sugar, salt, sesame oil and caramel color. Then, the resulting rice mixture was cooked at 100°C for 25 minutes. The rice mixture was cooled for 3 minutes in a rectangular forming frame, and then cut into glutinous rice pieces of 15 cm (W)×15 cm (H)×10 cm (D). Each of the cut glutinous rice pieces was put into a packing material, and the packing material was sealed.

COMPARATIVE EXAMPLE 3

300 g of glutinous rice was washed with water, and the used water was discarded. Then, certain materials such as chestnut, jujube and currant were added, and cooked rice water was also added to the glutinous rice. Here, the cooked rice water was previously prepared by mixing soy sauce, cinnamon essence, sugar, salt, sesame oil and caramel color. Then, the resulting rice mixture was cooked at 100°C for 25 minutes. The rice mixture was cooled for 3 minutes in a rectangular forming frame, and then cut into glutinous rice pieces of 15 cm (W)×15 cm (H)×10 cm (D). Each of the cut glutinous rice pieces was put into a heat-resistant packing material, and the heat-resistant packing material was sealed, subject to a retort sterilization process at 121°C for 20 to 30 minutes, and then cooled.

EXAMPLE 1

A solid material used in the flavored glutinous rice including jujube, chestnut and pine nuts was blenched and dipped in a 0.1~0.3 % by weight calcium solution, and the used calcium solution was discarded. Then, the solid material used in the flavored glutinous rice was washed and dipped for 1 hour. Glutinous rice was homogeneously mixed with the solid material used in the flavored glutinous rice, and the resulting glutinous rice mixture was coated with a constant ratio of the sesame oil and maize germ oil (sesame oil : maize germ oil = 3:1, or content of oil to the solid matter: 0.5 to 0.1% by weight). Then, a constant amount of the glutinous rice mixture was auto-charged into a stick-shaped heat-resistant packing material. Separately, cooked rice water was prepared by adding soy sauce (0.8 % by weight), cinnamon essence (0.03 % by weight), sesame oil (1.5 % by weight), salt (0.06 % by weight), sugar (3.1 % by weight) and purified water, based on the total content of the product, and boiling the component mixture at 50 to 70°C for 30 minutes. The cooked rice water was further charge into the stick shape packing material filled with a constant amount of the solid matter, and the stick-shaped packing material was sealed. The sealed stick-shaped packing material [15 cm (W) × 15 cm (H) × 10 cm (D)] was subject to retort sterilization in a closed space at 110 to 125°C for 20 to 40 minutes. In this case, the sterilization and cooling processes were performed at the same time. Then, the sterilized stick-shaped packing material was cooled for 10 to 20 minutes. Here, the sterilized stick-shaped packing material was sterilized in a retort tank at a rotary speed of 3 to 6 rpm in order to achieve a uniform color and improved quality of the product.

The stick-shaped instant flavored glutinous rice products prepared in Comparative examples 1 to 3 and Example 1 were analyzed as follows.

Table 1 lists the results of the quantitative analysis of microorganisms in the stick-shaped instant flavored glutinous rice products of Comparative examples 1 to 3 and Example 1. Here, the quantitative analysis was carried out by keeping the stick-shaped instant flavored glutinous rice products at 35°C for 3 days and quantifying generic bacteria and heat-resistant bacteria.

### [ Table 1

[Table 1]

**[Table ]**

| Items | | C. Ex. 1 | C. Ex. 2 | C. Ex. 3 | Ex. 1 |
|---|---|---|---|---|---|
| Kinds | Generic bacteria(cfu/g) | 3.7*10⁶ | 8.9*10⁵ | - | - |
| | Heat-resistant bacteria (cfu/g) | 1.5*10³ | 4.4*10⁴ | - | - |

Table 2 lists the results of the texture analysis of chestnuts used in the stick-shaped instant flavored glutinous rice products of Comparative examples 1 to 3 and Example 1. Here, the texture analysis was carried out using a texture analyzer.

### [71] Table 2

[Table 2]

**[Table ]**

| Items | C. Ex. 1 | C. Ex. 2 | C. Ex. 3 | Ex. 1 |
|---|---|---|---|---|
| Texture of chestnut(kg.m/s ²) | 18.5 | 17.9 | 4.9 | 18.1 |

Table 3 lists the results of the color system analysis of jujubes used in the stick-shaped instant flavored glutinous rice products of Comparative examples 1 to 3 and Example 1. Here, the color system analysis was carried out using a Hunt Lab value. In the color system, a Hunt Lab value is represented by an 'L value' showing brightness on the longitudinal axis, and 'a and b values' showing colors on the vertical axis.

### Table 3

[Table 3]

**[Table]**

| Items | C. Ex. 1 | C. Ex. 2 | C. Ex. 3 | Ex. 1 |
|---|---|---|---|---|
| 'L' value of jujube | 18.24 | 18.31 | 10.12 | 12.89 |
| 'a' value of jujube | 8.24 | 8.14 | 6.06 | 7.35 |
| 'b' value of jujube | 9.50 | 9.38 | 6.50 | 8.12 |

Table 4 lists the results of the sensory test of the stick-shaped instant flavored glutinous rice products of Comparative examples 1 to 3 and Example 1, which were evaluated by 50 consumers. The sensory test was carried out for items such as flavor, palatability, color and overall taste.

### Table 4

[Table 4]

**[Table ]**

| Items | Flavor | Palatability | Color | Overall taste |
|---|---|---|---|---|
| C. Ex. 1 | 4.21 | 3.91 | 3.81 | 4.01 |
| C. Ex. 3 | 3.48 | 3.57 | 3.61 | 3.69 |
| Ex. 1 | 3.97 | 3.92 | 3.86 | 3.95 |

*Levels of the sensory test were divided into a 5 point scale.

In detail, the sensory test was evaluated, as follows: 5: Very good, 4: Good, 3: Mediocre, 2: Poor, and 1: Very poor.

From the sensory test results, it was revealed that the flavored glutinous rice (Comparative example 1) prepared by the traditional method and the flavored glutinous rice (Example 1), whose safety against the microorganisms are secured by using the retort process according to the present invention, have excellent quality such as flavor, palatability, color and overall taste, compared to the flavored glutinous rice (Comparative example 3) prepared by the conventional retort process.

## Claims

1. A method for preparing a stick-shaped instant flavored glutinous rice, the method comprising:
(a) blenching and dipping a solid material used in the stick-shaped instant flavored glutinous rice in an aqueous calcium solution;
(b) washing glutinous rice and dipping the glutinous rice in a caramel color solution;
(c) homogeneously mixing the solid material used in the flavored glutinous rice with the glutinous rice dipped in the step (b) and coating the resulting mixture with sesame oil and maize germ oil:
(d) primarily charging the mixture of the glutinous rice and the solid material used in the flavored glutinous rice into a stick-shaped, heat-resistant packing material;
(e) secondarily charging cooked rice water into the solid matter-charged packing material;
(f) sealing the completely charged packing material;
(g) subjecting the completely charged packing material to a retort process; and
(h) cooling the completely charged packing material.

2. The method for preparing a stick-shaped instant flavored glutinous rice according to claim 1, wherein the solid material used in the flavored glutinous rice is at least one raw material selected from the group consisting of jujube, chestnut, and pine nut.

3. The method for preparing a stick-shaped instant flavored glutinous rice according to claim 1, wherein, in the step (e), the cooked rice water contains at least one material selected from the group consisting of soy sauce, cinnamon essence, sugar, salt and sesame oil.

4. The method for preparing a stick-shaped instant flavored glutinous rice according to claim 1, wherein the retort process in the step (g) is carried out:
(1) at a temperature of 80 to 120°C for 5 to 20 minutes; and
(2) at a temperature of 100 to 140°C for 5 to 20 minutes.

5. The method for preparing a stick-shaped instant flavored glutinous rice according to claim 1, wherein cooling and sterilization processes are carried out at the same time in the step (g).

6. A stick-shaped instant flavored glutinous rice prepared according to the method defined in any one of claims 1 to 5.

## Patentansprüche

1. Verfahren zur Herstellung eines stabförmigen, instant aromatisierten und klebrigen Reises, wobei das Verfahren umfasst:
(a) Blanchieren und Tauchen eines festen Materials, das im stabförmigen, instant aromatisierten und klebrigen Reis verwendet wird, in einer wässrigen Calcium-Lösung;
(b) Waschen des klebrigen Reises und Tauchen des klebrigen Reises in einer karamellfarbenen Lösung;
(c) homogenes Vermischen des festen Materials, das im aromatisierten klebrigen Reis verwendet wird, mit dem in Schritt (b) eingetauchten klebrigen Reis und Beschichten des resultierenden Gemisches mit Sesamöl und Maiskeimöl;
(d) in einem ersten Schritt, Beladen eines stabförmigen, hitzebeständigen Verpackungsmaterials mit dem Gemisch aus dem klebrigen Reis und dem festen Material, das im aromatisierten klebrigen Reis verwendet wird;
(e) in einem zweiten Schritt, Beladen des Verpackungsmaterials, das mit dem festen Gegenstand beladen ist, mit gekochtem Reiswasser;
(f) Abdichten des vollständig beladenen Verpackungsmaterials;
(g) Zuführen des vollständig beladenen Verpackungsmaterials einem Retortenprozess; und
(h) Kühlen des vollständig beladenen Verpackungsmaterials.

2. Verfahren zur Herstellung eines stabförmigen, instant aromatisierten und klebrigen Reises nach Anspruch 1, wobei das feste Material, das im aromatisierten klebrigen Reis verwendet wird, mindestens ein Rohmaterial ist, das ausgewählt ist aus der Gruppe bestehend aus Jujube, Kastanie, und Pinienkern.

3. Verfahren zur Herstellung eines stabförmigen, instant aromatisierten und klebrigen Reises nach Anspruch 1, wobei, in Schritt (e), das gekochte Reiswasser mindestens ein Material enthält, das ausgewählt ist aus der Gruppe bestehend aus Sojasauce, Zimtessenz, Zucker, Salz und Sesamöl.

4. Verfahren zur Herstellung eines stabförmigen, instant aromatisierten und klebrigen Reises nach Anspruch 1, wobei der Retortenprozess in Schritt (g) ausgeführt wird:
(1) bei einer Temperatur von 80 bis 120°C für eine Dauer von 5 bis 20 Minuten; und
(2) bei einer Temperatur von 100 bis 140°C für eine Dauer von 5 bis 20 Minuten.

5. Verfahren zur Herstellung eines stabförmigen, instant aromatisierten und klebrigen Reises nach Anspruch 1, wobei die Kühlungs- und Sterilisationsprozesse gleichzeitig im Schritt (g) ausgeführt werden.

6. Stabförmiger, instant aromatisierter und klebriger Reis, der gemäß dem in einem der Ansprüche 1 bis 5 definierten Verfahren hergestellt wird.

## Revendications

1. Procédé de préparation de riz gluant aromatisé instantané en forme de bâtonnet, le procédé comprenant:
(a) blanchir et plonger un matériau solide utilisé dans le riz gluant aromatisé instantané en forme de bâtonnet dans une solution aqueuse de calcium;
(b) laver le riz gluant et plonger le riz gluant dans une solution de couleur caramel;
(c) mélanger de façon homogène le matériau solide utilisé dans le riz gluant aromatisé avec le riz gluant plongé dans l'étape (b) et revêtir la mixture résultante avec huile de sésame et huile de germes de maïs;
(d) charger principalement la mixture du riz gluant et le matériau solide utilisé dans le riz gluant aromatisé dans un matériau d'emballage résistant à chaleur, en forme de bâtonnet;
(e) charger secondairement l'eau de riz cuit dans le matériau d'emballage chargé de matières solides;
(f) faire l'étanchéité du matériau d'emballage complètement chargé;
(g) soumettre le matériau d'emballage complètement chargé à un traitement en autoclave; et
(h) refroidir le matériau d'emballage complètement chargé.

2. Procédé de préparation de riz gluant aromatisé instantané en forme de bâtonnet selon la revendication 1, où le matériau solide utilisé dans le riz gluant aromatisé est au moins un matériau brut sélecté du groupe formé de jujube, châtaigne comestible, et noix de pin.

3. Procédé de préparation de riz gluant aromatisé instantané en forme de bâtonnet selon la revendication 1, où dans l'étape (e), l'eau de riz cuit comprend au moins un matériau sélecté du groupe formé de sauce de soja, essence de cannelle, sucre, sel et huile de sésame.

4. Procédé de préparation de riz gluant aromatisé instantané en forme de bâtonnet selon la revendication 1, où le traitement en autoclave dans l'étape (g) est réalisé:
(1) à une température de 80 à 120 °C pour 5 à 20 minutes; et
(2) à une température de 100 à 140 °C pour 5 à 20 minutes.

5. Procédé de préparation de riz gluant aromatisé instantané en forme de bâtonnet selon la revendication 1, où les procédés de refroidissement et de stérilisation sont réalisés en même temps dans l'étape (g).

6. Procédé de préparation de riz gluant aromatisé instantané en forme de bâtonnet selon le procédé défini dans l'une quelconque des revendications 1 à 5.
